# EUROPÄISCHE PATENTANMELDUNG

(11) **EP 4 279 688 A1**
(43) Veröffentlichungstag der Anmeldung: **22.11.2023**
(21) Anmeldenummer: 23174232.1
(22) Anmeldetag: 19.05.2023
(51) Int. Cl.: E05B 79/06, E05B 81/54, E05B 81/76, E05B 85/10, E05B 85/18

(54) **FAHRZEUGTÜR MIT EINER GRIFFANORDNUNG**

(30) Priorität: 20.05.2022 DE 102022205048
(71) Anmelder: Witte Automotive GmbH, 42551 Velbert (DE)
(72) Erfinder: MENSCH, Reinaldo, 42113 Wuppertal (DE); HANDL, Patrick, 41540 Dormagen (DE); STEINHAUER, Karsten, 45147 Essen (DE)
(74) Vertreter: Liedtke & Partner Patentanwälte

(57) **Zusammenfassung**

Die Erfindung betrifft eine Fahrzeugtür (1) mit einer Griffanordnung (2), wobei die Fahrzeugtür (1) zumindest:
- eine Türtragstruktur (3), und
- eine Schachtleiste (8) umfasst, die oberseitig an der Türtragstruktur (3) angeordnet ist,
wobei die Griffanordnung (2) mindestens ein Griffelement (9) und mindestens ein erstes Sensormodul (12) umfasst, wobei das erste Sensormodul (12) außen auf eine Oberseite der Türtragstruktur (3) anordenbar und fixierbar ist und wobei das erste Sensormodul (12) mindestens eine Kopplungsschnittstelle (15) zur automatischen Kopplung des ersten Sensormoduls (12) mit dem Griffelement (9) und/oder mit einem optionalen zweiten Sensormodul (13) umfasst. Des Weiteren betrifft die Erfindung ein Fahrzeug mit einer solchen Fahrzeugtür.

## Beschreibung

Die Erfindung betrifft eine Fahrzeugtür mit einer Griffanordnung.

Türgriffe für Fahrzeugtüren sind grundsätzlich bekannt und werden beispielsweise in Kraftfahrzeugen eingesetzt, um eine schlüssellose Entriegelung des Fahrzeugs zu ermöglichen. Sensoren dieser Türgriffe sind in Form von kapazitiven Näherungsschaltern ausgebildet, das heißt sie messen die Kapazität zwischen einer aktiven Elektrode und einem elektrischen Erdpotential.

Aufgabe der vorliegenden Erfindung ist es, eine Fahrzeugtür mit einer einfach zu montierenden Griffanordnung anzugeben. Darüber hinaus ist es Aufgabe der Erfindung, ein Fahrzeug mit einer solchen Fahrzeugtür mit einer verbesserten Griffanordnung anzugeben.

Hinsichtlich der Fahrzeugtür wird die Aufgabe erfindungsgemäß durch die Merkmale des Patentanspruchs 1 gelöst. Hinsichtlich des Fahrzeugs wird die Aufgabe erfindungsgemäß durch die Merkmale des Patentanspruchs 10 gelöst.

Die erfindungsgemäße Fahrzeugtür umfasst zumindest eine Griffanordnung und eine Türtragstruktur, wobei die Griffanordnung mindestens ein Griffelement, mindestens ein erstes Sensormodul und optional ein zweites Sensormodul umfasst, wobei das erste Sensormodul außen auf eine Oberseite der Türtragstruktur anordenbar und fixierbar ist und mindestens eine Kopplungsschnittstelle zur automatischen Kopplung des ersten Sensormoduls mit einer fahrzeugseitigen Komponente, insbesondere einer Türtragstruktur, zum Beispiel einem Strukturabschnitt, einer Schachtleiste und/oder einer Trägerleiste, und/oder mit dem Griffelement und/oder optional mit dem zweiten Sensormodul umfasst.

Die mit der Erfindung erzielten Vorteile bestehen insbesondere darin, dass eine Fahrzeugtür mit einer solchen multifunktionalen und multisensorischen Griffanordnung einfach und kostengünstig montierbar ist. Zudem benötigt eine solche Griffanordnung weniger Bauraum. Darüber hinaus kann bei einer Anordnung der Griffanordnung an einer Schachtleiste im Türrohbau die herkömmliche Griffmulde entfallen. Somit ist auf einfache und kostengünstige Art und Weise ein flächenbündiges Design gegenüber herkömmlichen kostenintensiven ausfahrbaren Griffsystemen erreicht.

Die Fahrzeugtür kann insbesondere eine Schachtleiste aufweisen, die oberseitig an der Türtragstruktur angeordnet ist. Je nach Ausführungsform der Türtragstruktur kann das erste Sensormodul auf der Türtragstruktur, insbesondere auf einer abgewinkelten Strukturfläche oder einem Strukturabschnitt und/oder auf oder an der Schachtleiste und/oder der Trägerleiste angeordnet sein.

In einer möglichen Ausführungsform ist die mindestens eine Kopplungsschnittstelle selbstzentrierend ausgebildet, um bei einer Montage des Griffelements und/oder des zweiten Sensormoduls an das erste Sensormodul oder bei einer Montage des ersten Sensormoduls an die Türtragstruktur und/oder die Schachtleiste die Kopplungsschnittstelle des ersten Sensormoduls selbsttätig mit einer korrespondierenden Gegenkopplungsschnittstelle des jeweiligen Griffelements, der jeweiligen Türtragstruktur, der jeweiligen Schachtleiste und/oder des jeweiligen zweiten Sensormoduls zu koppeln und/oder zu verbinden, insbesondere mechanisch und/oder elektrisch zu verbinden.

Beispielsweise kann die mindestens eine Kopplungsschnittstelle des ersten Sensormoduls als ein Steckmodul ausgebildet sein. Das Steckmodul kann beispielsweise eine Anzahl von Kontaktelementen, zum Beispiel eine Anzahl von Steckkontakten für eine elektrische Verbindung und/oder eine Anzahl von Zentrierkontakten zur mechanischen Zentrierung der Kopplungsschnittstelle mit der Gegenkopplungsschnittstelle und/oder eine Anzahl von Verbindungskontakten zur mechanischen, insbesondere formschlüssigen und/oder kraftschlüssigen, Verbindung der Kopplungsschnittstelle mit der Gegenkopplungsschnittstelle, umfassen. Dabei kann das jeweilige Kontaktelement derart eingerichtet sein, dass dieses gleichzeitig der elektrischen Verbindung, der Zentrierung und der mechanischen Verbindung dient. Mit anderen Worten: Ein einziges Kontaktelement kann gleichzeitig als Steckkontakt, Zentrierkontakt und Verbindungskontakt ausgebildet sein.

Eine Weiterbildung sieht vor, dass die komplementäre Gegenkopplungsschnittstelle des Griffelements, der Türtragstruktur, der Schachtleiste und/oder des zweiten Sensormoduls als Steckaufnahmemodul ausgebildet ist. Das Steckaufnahmemodul kann beispielsweise eine Anzahl von Gegenkontaktelementen, zum Beispiel eine Anzahl von Steckbuchsen für eine elektrische Verbindung und/oder eine Anzahl von Zentrierbuchsen zur mechanischen Zentrierung der Kopplungsschnittstelle mit der Gegenkopplungsschnittstelle und/oder eine Anzahl von Verbindungsbuchsen zur mechanischen, insbesondere formschlüssigen und/oder kraftschlüssigen, Verbindung der Kopplungsschnittstelle mit der Gegenkopplungsschnittstelle, umfassen. Dabei kann das jeweilige Gegenkontaktelement derart eingerichtet sein, dass dieses gleichzeitig der elektrischen Verbindung, der Zentrierung und der mechanischen Verbindung dient. Mit anderen Worten: Ein einziges Gegenkontaktelement kann gleichzeitig als Steckbuchse, Zentrierbuchse und Verbindungsbuchse ausgebildet sein.

In einer alternativen, insbesondere umgekehrten, Ausführungsform kann das erste Sensormodul die oben beschriebene Gegenkopplungsschnittstelle und das Griffelement, das zweite Sensorelement, die Türtragstruktur und/oder die Schachtleiste die oben beschriebene Kopplungsschnittstelle umfassen.

Die Kopplungsschnittstelle und die Gegenkopplungsschnittstelle sind bevorzugt selbstzentrierend ausgebildet, um beim Verbinden dieser miteinander zumindest teilweise eine elektrische und/oder eine mechanische Verbindung zwischen diesen herzustellen. Beispielsweise kann beim Zusammenstecken des ersten Sensormoduls mit dem Griffelement und/oder mit dem zweiten Sensormodul automatisch eine elektrische Verbindung herstellbar sein.

Beispielsweise kann die mindestens eine Kopplungsschnittstelle als ein elektrisches Steckmodul mit elektrischen Steckkontakten ausgebildet sein. Insbesondere ist die mindestens eine Kopplungsschnittstelle als eine automatische Kopplungseinrichtung ausgebildet, die in Montagerichtung selbstzentrierend ist, um insbesondere die Kopplungsschnittstelle des ersten Sensormoduls beim Montieren des Griffelements und/oder des zweiten Sensormoduls an das erste Sensormodul oder beim Montieren des ersten Sensormoduls an die Türtragstruktur und/oder an die Schachtleiste selbsttätig mit korrespondierenden Gegenkopplungsschnittstellen des Griffelements, der Türtragstruktur, der Schachtleiste und/oder des zweiten Sensormoduls mechanisch und/oder elektrisch zu verbinden.

Gemäß einer Weiterbildung können im verbundenen Zustand von Kopplungsschnittstelle und Gegenkopplungsschnittstelle das erste Sensormodul und das zweite Sensormodul übereinander und in einem vorgegebenen Abstand zueinander angeordnet sein, um signaltechnisch miteinander zu koppeln. Beispielsweise sind das erste Sensormodul und das zweite Sensormodul als ein sogenanntes MoC-Sensormodul mit einander gegenüberliegenden Metallflächen ausgebildet, welche relativ zueinander beweglich angeordnet sind, um ein Sensorsignal, insbesondere ein messtechnisches Signal für einen sich ändernden Abstand und/oder ein sich änderndes elektrisches Feld zwischen den Metallflächen, zu erzeugen.

Eine weitere Ausführungsform sieht vor, dass das erste Sensormodul eine erste Kopplungsschnittstelle, die mit einer ersten Gegenkopplungsschnittstelle des Griffelements und/oder des zweiten Sensormoduls koppelbar ist, und eine zweite Kopplungsschnittstelle umfasst, die mit einer zweiten Gegenkopplungsschnittstelle der Türtragstruktur koppelbar ist. Beispielsweise sind die erste Kopplungsschnittstelle auf einer Oberseite des ersten Sensormoduls und die zweite Kopplungsschnittstelle auf einer Unterseite des ersten Sensormoduls ausgebildet. Zusätzlich kann das erste Sensormodul mit der Türtragstruktur verschraubbar sein.

Je nach Fahrzeugtür kann diese auch einen Fahrzeugrahmen aufweisen, der an die Türtragstruktur angrenzt.

Hinsichtlich des Fahrzeugs wird die Aufgabe erfindungsgemäß gelöst durch mindestens eine Fahrzeugtür, wie sie zuvor beschrieben ist.

Ausführungsbeispiele der Erfindung werden anhand von Zeichnungen näher erläutert. Dabei zeigen:
- Figur 1: schematisch in perspektivischer Darstellung eine Fahrzeugtür mit einer Griffanordnung,
- Figur 2: schematisch einen vergrößerten Ausschnitt der perspektivischen Darstellung gemäß Figur 1 im Bereich der Griffanordnung,
- Figur 3: schematisch in vergrößerter Explosionsdarstellung eine Fahrzeugtür mit bereits montiertem ersten Sensormodul und vor einer automatischen Kopplung mit einem zu montierenden Griffelement mit einem zweiten Sensormodul,
- Figur 4: schematisch in perspektivischer Darstellung eine Unterseite eines Griffelements, und
- Figur 5: schematisch eine weitere perspektivische Darstellung der Unterseite des Griffelements.

Einander entsprechende Teile sind in allen Figuren mit den gleichen Bezugszeichen versehen.

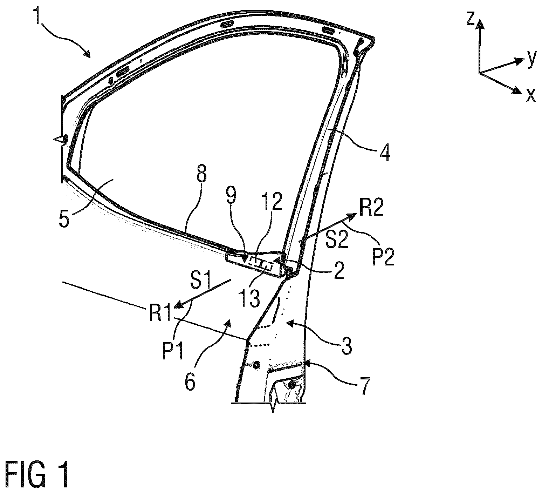

**Figur 1** zeigt schematisch in perspektivischer Darstellung eine Fahrzeugtür 1 mit einer Griffanordnung 2. Bei der Griffanordnung 2 handelt es sich um einen Türaußengriff.

Die Fahrzeugtür 1 umfasst eine Türtragstruktur 3 und einen Türrahmen 4. Alternativ kann die Fahrzeugtür 1 rahmenlos ausgebildet sein (nicht dargestellt) und keinen Türrahmen 4 aufweisen, zum Beispiel bei einem Cabriolet. Die Erfindung ist sowohl auf Fahrzeugtüren 1 mit Türrahmen 4 als auch auf rahmenlose Fahrzeugtüren 1 anwendbar. Nachfolgend wird die Erfindung für eine Fahrzeugtür 1 mit Türrahmen 4 beschrieben.

Der Türrahmen 4 weist eine Scheibenöffnung 5 auf, welche durch eine nicht näher dargestellte Fensterscheibe geschlossen werden kann. Hierzu ist die Fensterscheibe in üblicher Art und Weise in der Türtragstruktur 3 beweglich angeordnet, insbesondere zwischen einer geschlossenen Stellung, in welcher die Fensterscheibe angehoben ist und die Scheibenöffnung 5 geschlossen ist, und einer geöffneten Stellung, in welcher die Fensterscheibe in der Türtragstruktur 3 versenkt ist und die Scheibenöffnung 5 geöffnet ist.

Die Türtragstruktur 3 weist beispielsweise eine Fahrzeugaußenhaut 6 und eine Fahrzeuginnenhaut 7 auf. Die Türtragstruktur 3 ist aus einem Blech gefertigt, welches üblicherweise lackiert ist. Innenseitig kann die Türtragstruktur 3 verkleidet sein.

Die Fahrzeugtür 1 kann darüber hinaus eine Schachtleiste 8 aufweisen. Die Schachtleiste 8 ist oberseitig an der Türtragstruktur 3 angeordnet. An der Türtragstruktur 3 ist beispielsweise oberseitig ein schmaler Längsspalt vorgesehen, durch den die Fensterscheibe bewegt wird. Die Schachtleiste 8 ist im Bereich des Längsspalts angeordnet und erstreckt sich zumindest bereichsweise längs der Türtragstruktur 3 beidseits der Fensterscheibe. Die Schachtleiste 8 dient der Abdichtung zwischen der Türtragstruktur 3 und der Fensterscheibe. Damit wird ein Eindringen insbesondere von Wasser, Schmutz, Schnee, aber auch von Wind in die Türtragstruktur 3 verhindert.

Die Schachtleiste 8 umfasst üblicherweise zwei weiche Dichtlippen, die sich beidseits an die Fensterscheibe legen. Sie sind beweglich, damit vermieden wird, dass es beim Bewegen der Fensterscheibe zu Geräuschen kommt.

Die Griffanordnung 2 ist an der Schachtleiste 8 und/oder der Türtragstruktur 3 bewegbar, insbesondere schwenkbar, angeordnet.

Alternativ kann die Griffanordnung 2 translatorisch bewegbar, insbesondere verfahrbar oder verschiebbar, ausgebildet sein (nicht näher dargestellt). Die Erfindung ist sowohl auf eine rotatorisch bewegbare Griffanordnung 2 als auch auf eine translatorisch bewegbare Griffanordnung 2 anwendbar. Nachfolgend wird die Erfindung für eine rotatorisch bewegbare, insbesondere schwenkbare, Griffanordnung 2 beschrieben.

Die Griffanordnung 2 umfasst ein Griffelement 9, das an einer Außenseite der Fahrzeugtür 1 greifbar ist. Die Griffanordnung 2 ist somit außen und in einem Nassbereich liegend an der Schachtleiste 8 und/oder der Türtragstruktur 3 angeordnet.

Das Griffelement 9 ist derart ausgebildet, dass es als eine in zumindest zwei Richtungen R1, R2 betätigbare Einrichtung zum aktiven Betätigen von mindestens zwei Schaltfunktionen ausgebildet ist. Alternativ kann das Griffelement 9 auch nur in eine der Richtungen R1 oder R2 zum aktiven Betätigen von mindestens zwei Schaltfunktionen ausgebildet sein.

Das Griffelement 9 steht senkrecht von der Schachtleiste 8 und/oder der Türtragstruktur 3 nach oben ab. Das Griffelement 9 ist dabei zum Türrahmen 4 beabstandet angeordnet.

Die Griffanordnung 2 ist als ein multisensorisches und multifunktionales Griffmodul ausgebildet. Die Griffanordnung 2 umfasst beispielsweise ein erstes Sensormodul 12 und ein zweites Sensormodul 13.

Eine solche, an der Schachtleiste 8 und/oder der Türtragstruktur 3, insbesondere einer Strukturfläche oder einem Strukturabschnitt, vorgesehene bewegliche multisensorische und multifunktionale Griffanordnung 2 kann kompakt ausgebildet und einfach zu montieren sein und ermöglicht mehrere Schaltfunktionen und benötigt wenig Bauraum.

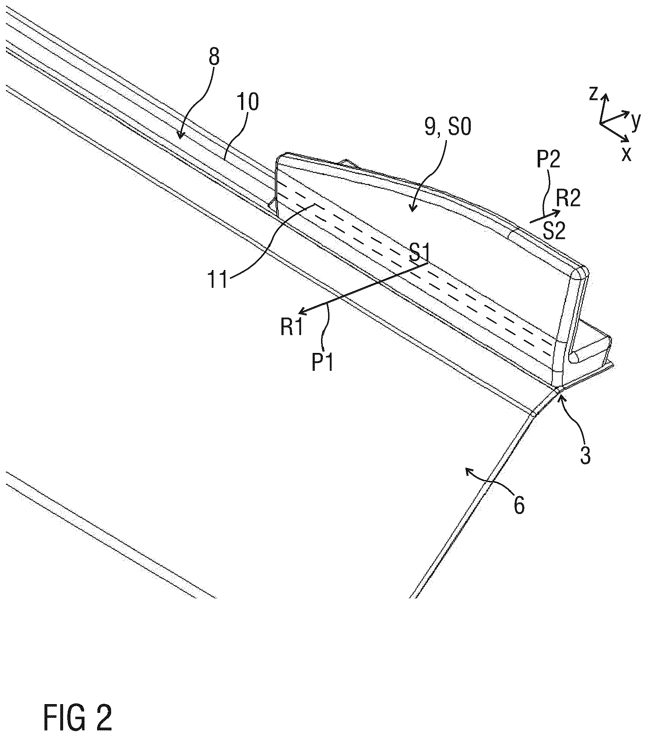

**Figur 2** zeigt schematisch einen vergrößerten Ausschnitt der perspektivischen Darstellung gemäß **Figur 1** im Bereich der Griffanordnung 2.

Die Schachtleiste 8 kann zusätzlich eine weitgehend senkrecht abstehende Trägerleiste 10 umfassen. Die Trägerleiste 10 kann Teil der Türtragstruktur 3 sein und beispielsweise von dieser als ein verlängerter Abschnitt ausgebildet sein. Die Trägerleiste 10 kann flexibel ausgebildet sein. Die Trägerleiste 10 kann zusätzlich als Dichtlippe ausgebildet sein.

Die Trägerleiste 10 erstreckt sich zumindest über einen Bereich oder Abschnitt längs der Schachtleiste 8 und/oder der Türtragstruktur 3. Auf der Trägerleiste 10 ist die Griffanordnung 2, insbesondere formschlüssig und/oder kraftschlüssig, angeordnet und begrenzt beweglich gelagert. Insbesondere ist die Griffanordnung 2 für geringste Bewegungen des Griffelements 9 beispielsweise in einem Bereich von 0,1 mm bis 5 mm, insbesondere 0,1 mm bis 2 mm, oder 1 Grad bis 10 Grad, insbesondere 1 Grad bis 5 Grad, an der Trägerleiste 10 beweglich gelagert, insbesondere translatorisch bewegbar beziehungsweise rotatorisch bewegbar.

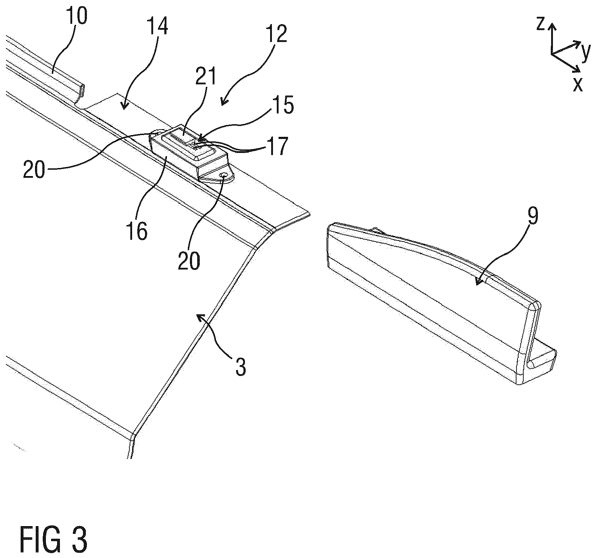

Beispielsweise umfasst das Griffelement 9 eine zu der Trägerleiste 10 korrespondierende Nut 11, insbesondere eine Längsnut. Die Griffanordnung 2 ist auf die Trägerleiste 10, insbesondere vertikal von oben, aufsteckbar oder, insbesondere horizontal entlang der Trägerleiste 10, aufschiebbar oder auf einer Strukturfläche oder einem Strukturabschnitt der Türtragstruktur 3 anbringbar, insbesondere montierbar. Im montierten Zustand der Griffanordnung 2 an der Fahrzeugtür 1 ist die Trägerleiste 10 vollständig in der Nut 11 angeordnet, wie in **Figur 2** gezeigt. **Figur 3** zeigt ein weiteres Beispiel, wobei die Trägerleiste 10 nur bereichsweise in der Nut 11 anordenbar ist.

Das Griffelement 9 ist beispielsweise ergonomisch geformt und kann von einer Hand eines Nutzers gegriffen, insbesondere umgriffen, werden. Dabei kann das Griffelement 9 zwischen einer ersten, weg von der Fahrzeugtür 1 gerichteten Schaltbewegung S1 in Richtung R1 und einer zweiten, hin zu der Fahrzeugtür 1 gerichteten Schaltbewegung S2 in Richtung R2 verstellbar, insbesondere schwenkbar, angeordnet sein. Hierdurch können verschiedene Schaltfunktionen parametriert werden, wie dies nachfolgend näher beschrieben ist.

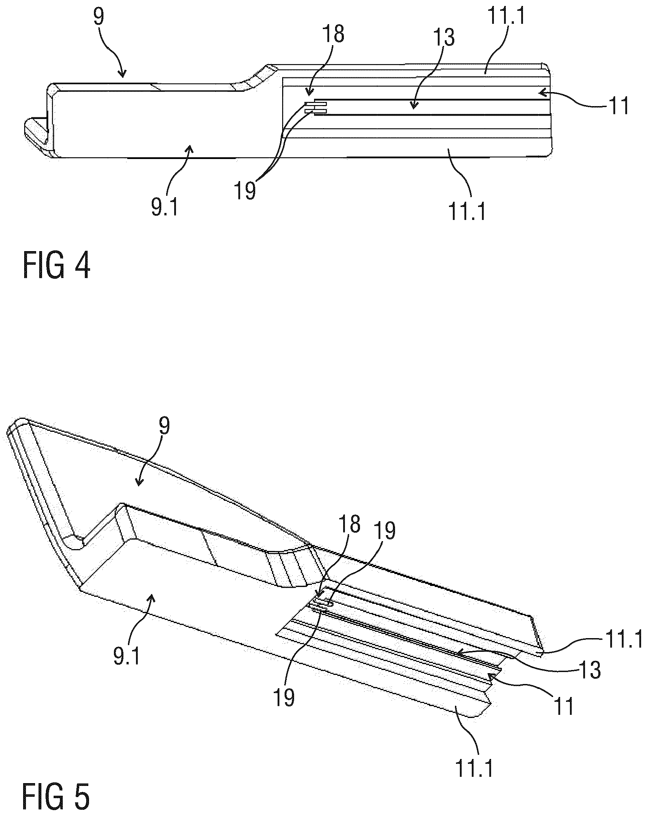

**Figur 3** zeigt schematisch in vergrößerter Darstellung die Fahrzeugtür 1 mit bereits montiertem ersten Sensormodul 12 und vor einer automatischen Kopplung des ersten Sensormoduls 12 mit dem zu montierenden Griffelement 9 mit dem in dem Griffelement 9 vormontierten oder integrierten optionalen zweiten Sensormodul 13 (dargestellt in **Figur 4**).

Das erste Sensormodul 12 ist außen auf eine Oberseite der Türtragstruktur 3 anordenbar und fixierbar. Insbesondere ist das erste Sensormodul 12 auf einem ebenen Strukturabschnitt 14 der Türtragstruktur 3 angeordnet. Dieser ebene Strukturabschnitt 14 ist als ein senkrecht von der vertikal ausgerichteten Türtragstruktur 3 abgewinkelter Tragstrukturabschnitt ausgebildet. Die Trägerleiste 10 endet vor dem ebenen Strukturabschnitt 14 und erstreckt sich senkrecht zu dem ebenen Strukturabschnitt 14 von der Türtragstruktur 3 vertikal nach oben. Der ebene Strukturabschnitt 14 kann auch durch einen Abschnitt der Trägerleiste 10 gebildet sein. Beispielsweise kann ein Endabschnitt der Trägerleiste 10 mittels eines Vertikalschnitts vom senkrechten Abschnitt der Trägerleiste 10 getrennt und um 90° gebogen sein, um den ebenen Strukturabschnitt 14 zur Aufnahme des ersten Sensormoduls 12 zu bilden.

Das erste Sensormodul 12 umfasst mindestens eine Kopplungsschnittstelle 15 zur automatischen Kopplung des ersten Sensormoduls 12 mit einer fahrzeugseitigen Komponente 16, zum Beispiel einer Batterie und/oder einem Bordnetz, und/oder mit dem Griffelement 9 und/oder mit dem zweiten Sensormodul 13 (dargestellt in **Figur 4**).

Beispielsweise ist die mindestens eine Kopplungsschnittstelle 15 als eine elektrische Steckverbindung mit mehreren Steckkontakten 17 ausgebildet. Insbesondere ist die mindestens eine Kopplungsschnittstelle 15 als eine automatische Kopplungseinrichtung ausgebildet, die selbstzentrierend ist, um diese beim Ankoppeln des Griffelements 9 und/oder des zweiten Sensormoduls 13 an das erste Sensormodul 12 selbsttätig mit einer korrespondierenden Gegenkopplungsschnittstelle 18, insbesondere Gegenkontakten 19, zum Beispiel Steckbuchsen, des Griffelements 9 und/oder des zweiten Sensormoduls 13 zu verbinden.

Das erste Sensormodul 12 kann zusätzlich beispielsweise mittels einer Verschraubung 20 auf dem ebenen Strukturabschnitt 14 montiert und befestigt sein oder werden.

Das erste Sensormodul 12 ist beispielsweise ein kapazitiver Sensor oder ein induktiver Sensor.

Das erste Sensormodul 12 umfasst beispielsweise zwei in einem Abstand zueinander angeordnete, nicht näher dargestellte Metallflächen, die relativ zueinander beweglich sind. Ein solcher Sensor wird auch als sogenannter MoC-Sensor (MoC = metal over cap oder metal over capacitive oder als kapazitiver Tastsensor) bezeichnet. Die Metallflächen werden auch als MoC-Bleche bezeichnet.

Beispielsweise sind eine erste Metallfläche an einem festen Trägerteil des ersten Sensormoduls 12, das an der Türtragstruktur 3 fixiert ist, und eine zweite Metallfläche an einem beweglichen Trägerteil des Sensormoduls 12 und/oder dem beweglichen Griffelement 9, insbesondere dem zweiten Sensormodul 13, angeordnet.

Die zweite Metallfläche, zum Beispiel ein Metallstreifen oder ein dünnes Metallblech, ist auf einer Seite des beweglichen Trägerteils oder des Griffelements 9 angeordnet, insbesondere befestigt, zum Beispiel geklebt oder gelötet, oder als ein Teil des zweiten Sensormoduls 13 ausgebildet.

Eine Betätigung, insbesondere Schwenkung, des Griffelements 9 bewirkt eine entsprechende Bewegung, insbesondere Schwenkung oder Vertikalbewegung, des beweglichen Trägerteils und mit diesem der zweiten Metallfläche relativ zur ersten Metallfläche.

Insbesondere ist das Griffelement 9 zwischen der ersten, weg von der Fahrzeugtür 1 gerichteten Schaltbewegung S1 in Richtung R1 und der zweiten, hin zur Fahrzeugtür 1 gerichteten Schaltbewegung S2 in Richtung R2 stellbar, insbesondere schwenkbar (wie in **Figuren 1** **und** **2** dargestellt). Das Griffelement 9 ist im nicht betätigten Zustand in eine Ausgangsstellung S0 positioniert. Das Griffelement 9 kann bei Betätigung in einem Bereich zwischen +/- 5° zur Ausgangsstellung S0 gemäß den Pfeilen P1, P2 geschwenkt werden.

Der Abstand zwischen der ersten Metallfläche und der zweiten Metallfläche kann im Bereich von 0,1 bis 2 mm liegen und beispielsweise 1 mm oder 1,5 mm betragen. Der Zwischenraum zwischen den Metallflächen weist bevorzugt ein Dielektrikum auf, das zum Beispiel ein Gas, insbesondere Luft, und/oder ein elastisch verformbarer Feststoff, wie zum Beispiel ein Kunststoffschaum oder ähnliches ist.

Eine Elektronikeinheit 21 (dargestellt in **Figur 3**) der Griffanordnung 2 erfasst eine durch die Bewegung des Griffelements 9 bewirkte Änderung des Abstands zwischen den Metallflächen und/oder eine verursachte Kapazitätsänderung oder Induktivitätsänderung. Dabei kann bereits eine durch eine Berührung des Griffelements 9 hervorgerufene minimale Bewegung, insbesondere Schwenkung, des Griffelements 9 und des beweglichen Trägerteils zu einer entsprechenden Drehung der zweiten Metallfläche relativ zu der ersten Metallfläche führen. Eine daraus resultierende Änderung des Abstands zwischen den beiden Metallflächen führt zu einer entsprechenden Kapazitätsänderung oder Induktivitätsänderung, welche mittels der Elektronikeinheit 21 erfassbar ist.

Mittels des beweglichen Trägerteils kann das an diesem befestigte Griffelement 9 in unterschiedliche, insbesondere entgegengesetzte und/oder senkrechte, Richtungen R1, R2 bewegt werden. Hierdurch lassen sich mehrere Schaltpunkte oder Schaltfunktionen erzeugen. So kann beispielsweise mittels einer Druckkraft, die auf das Griffelement 9 wirkt, eine Verriegelung eines Schlosses der Fahrzeugtür 1 und/oder des Fahrzeugs geschaltet werden. Mittels einer Zugkraft, die an dem Griffelement 9 wirkt, kann eine Entriegelung des Schlosses der Fahrzeugtür 1 und/oder des Fahrzeugs geschaltet werden.

Das zweite Sensormodul 13 kann beispielsweise ein kapazitiver Näherungsschalter am Griffelement 9, insbesondere zum kontaktlosen Austausch von Daten, insbesondere Signalen, der Elektronikeinheit 21 für eine oder mehrere Schaltfunktionen, zum Beispiel zum Entriegeln oder Verriegeln des Fahrzeugs, sein. Das zweite Sensormodul 13 umfasst beispielsweise eine Nahfeldantenne (Near Field Communication Antenna oder NFC Antenne) und einen Nahfeldsensor (auch kurz Near Field Communication Sensor). Das beispielsweise als kapazitive Näherungsschalter ausgebildete zweite Sensormodul 13 ist insbesondere außenseitig an dem Griffelement 9 angeordnet. Es versteht sich, dass für eine einwandfreie Funktion des Näherungsschalters darauf zu achten ist, dass die aktive Elektrode des Näherungsschalters nicht metallisch abgeschirmt ist.

Das Griffelement 9 und/oder das zweite Sensorelement 13 umfassen jeweils eine zugehörige oder eine gemeinsame Gegenkopplungsschnittstelle 18. Die Gegenkopplungsschnittstelle 18 umfasst ein oder mehrere Gegenkontakte 19, insbesondere zu den Steckkontakten 17 korrespondierende Gegenkontakte 19, zum Beispiel Steckbuchsen.

Bei einer Montage des Griffelements 9 mit dem vormontierten oder integrierten zweiten Sensor 13 wird beispielsweise das Griffelement 9 auf die Trägerleiste 10 oder dem Strukturabschnitt 14 horizontal aufgeschoben. Insbesondere wird das Griffelement 9 solange auf die Trägerleiste 10 oder den Strukturabschnitt 14 aufgeschoben, bis die Kopplungsschnittstelle 15 und die Gegenkopplungsschnittstelle 18 selbsttätig miteinander gekoppelt, insbesondere formschlüssig und/oder kraftschlüssig miteinander gekoppelt, insbesondere elektrisch koppelnd, sind.

**Figuren 4 und 5** zeigen das Griffelement 9 in perspektivischen Darstellungen von unten.

Das Griffelement 9 weist auf seiner Unterseite 9.1 die Nut 11, insbesondere eine Längsnut, oder eine längliche Ausnehmung auf, mittels welcher das Griffelement 9 auf die Trägerleiste 10 oder dem Strukturabschnitt 14 aufsteckbar oder aufschiebbar ist.

Das zweite Sensormodul 13 und/oder die zweite Metallfläche des ersten Sensormoduls 12, insbesondere eine Gegenmetallfläche, sind beziehungsweise ist mittig in der Nut 11 angeordnet. Das zweite Sensormodul 13 und/oder die zweite Metallfläche erstrecken sich längs der Nut 11.

Die Unterseite 9.1 ist komplementär zum ebenen Strukturabschnitt 14 der Türtragstruktur 3 (dargestellt in **Figur 3**) und im Wesentlichen eben ausgebildet. Die Nut 11 weist einen ebenen Rand 11.1 auf. Hierdurch liegt das Griffelement 9 bündig an dem ebenen Strukturabschnitt 14 im montierten Zustand an.

Die beiden Sensormodule 12, 13 sind im montierten Zustand des Griffelements 9 an dem Strukturabschnitt 14 in der innen liegenden Nut 11 des Griffelements 9 geschützt angeordnet, insbesondere vom Körper des Griffelements 9 vollständig umgeben und nach außen gekapselt.

Die Erfindung erlaubt es, die Griffanordnung 2 modular und variabel, insbesondere mit oder ohne Sensormodule 12, 13 oder nur mit einem der Sensormodule 12 oder 13 oder mit beiden Sensormodulen 12 und 13, aufzubauen. Beispielsweise ist eines der Sensormodule 13 an dem Griffelement 9 vormontiert oder integriert. Das andere Sensormodul 12 ist an der Türtragstruktur 3 vormontiert. Mittels Steckverbindung können die Kopplungsschnittstelle 15 und die Gegenkopplungsschnittstelle 18 automatisch beim Miteinanderfügen des einen Sensormoduls 12 mit dem Griffelement 9 selbsttätig gekoppelt, insbesondere elektrisch, verbunden werden.

### BEZUGSZEICHENLISTE

- 1: Fahrzeugtür
- 2: Griffanordnung
- 3: Türtragstruktur
- 4: Türrahmen
- 5: Scheibenöffnung
- 6: Fahrzeugaußenhaut
- 7: Fahrzeuginnenhaut
- 8: Schachtleiste
- 9: Griffelement
- 9.1: Unterseite
- 10: Trägerleiste
- 11: Nut
- 11.1: Rand
- 12: erstes Sensormodul
- 13: zweites Sensormodul
- 14: ebener Strukturabschnitt
- 15: Kopplungsschnittstelle
- 16: fahrzeugseitige Komponente
- 17: Steckkontakt
- 18: Gegenkopplungsschnittstelle
- 19: Gegenkontakt
- 20: Verschraubung
- 21: Elektronikeinheit

- P1, P2: Pfeil
- R1, R2: Richtung
- S0: Ausgangsstellung
- S1, S2: Schaltbewegung

## Patentansprüche

1. Fahrzeugtür (1) mit einer Griffanordnung (2), wobei die Fahrzeugtür (1) zumindest eine Türtragstruktur (3) umfasst und die Griffanordnung (2) mindestens ein Griffelement (9) und mindestens ein erstes Sensormodul (12) umfasst, wobei das erste Sensormodul (12) außen auf eine Oberseite der Türtragstruktur (3) anordenbar und fixierbar ist und wobei das erste Sensormodul (12) mindestens eine Kopplungsschnittstelle (15) zur automatischen Kopplung des ersten Sensormoduls (12) mit dem Griffelement (9) und/oder mit einem optionalen zweiten Sensormodul (13) umfasst.

2. Fahrzeugtür (1) nach Anspruch 1,
wobei die mindestens eine Kopplungsschnittstelle (15) selbstzentrierend ist, um bei einer Montage des Griffelements (9) und/oder des zweiten Sensormoduls (13) an das erste Sensormodul (12) und/oder bei einer Montage des ersten Sensormoduls (12) an die Türtragstruktur (3), an einem Strukturabschnitt (14), an einer Trägerleiste (10) und/oder an einer Schachtleiste (8) die Kopplungsschnittstelle (15) des ersten Sensormoduls (12) selbsttätig mit einer korrespondierenden Gegenkopplungsschnittstelle (18) des jeweiligen Griffelements (9) und/oder des jeweiligen zweiten Sensormoduls (13) zu koppeln und/oder zu verbinden.

3. Fahrzeugtür (1) nach einem der vorhergehenden Ansprüche, wobei die mindestens eine Kopplungsschnittstelle (15) des ersten Sensormoduls (12) als ein Steckmodul ausgebildet ist.

4. Fahrzeugtür (1) nach einem der vorhergehenden Ansprüche,
wobei die komplementäre Gegenkopplungsschnittstelle (18) des Griffelements (9) und/oder des zweiten Sensormoduls (13) als Steckaufnahmemodul ausgebildet ist.

5. Fahrzeugtür (1) nach einem der vorhergehenden Ansprüche, wobei die Kopplungsschnittstelle (15) und die Gegenkopplungsschnittstelle (18) selbstzentrierend ausgebildet sind, um beim Verbinden dieser miteinander zumindest teilweise eine elektrische und/oder eine mechanische Verbindung zwischen diesen herzustellen.

6. Fahrzeugtür (1) nach einem der vorhergehenden Ansprüche, wobei die Kopplungsschnittstelle (15) und die Gegenkopplungsschnittstelle (18) in Montagerichtung selbstzentrierend ausgebildet sind.

7. Fahrzeugtür (1) nach einem der vorhergehenden Ansprüche, wobei im verbundenen Zustand von Kopplungsschnittstelle (15) und Gegenkopplungsschnittstelle (18) das erste Sensormodul (12) und das zweite Sensormodul (13) übereinander und in einem vorgegebenen Abstand zueinander angeordnet sind, um signaltechnisch miteinander zu koppeln.

8. Fahrzeugtür (1) nach einem der vorhergehenden Ansprüche, wobei das erste Sensormodul (12) eine weitere Kopplungsschnittstelle (15) umfasst, die mit einer weiteren Gegenkopplungsschnittstelle (18) der Türtragstruktur (3) koppelbar ist.

9. Fahrzeugtür (1) nach einem der vorhergehenden Ansprüche, wobei das erste Sensormodul (12) zusätzlich mit der Türtragstruktur (3) verschraubbar ist.

10. Fahrzeug mit mindestens einer Fahrzeugtür (1) nach einem der vorhergehenden Ansprüche.
